# EUROPÄISCHE PATENTSCHRIFT

(11) **EP 4 022 290 B1**
(45) Veröffentlichungstag und Bekanntmachung des Hinweises auf die Patenterteilung: **23.10.2024**
(21) Anmeldenummer: 20761242.5
(22) Anmeldetag: 26.08.2020
(51) Int. Cl.: G01N 21/88, G01N 21/95, G01N 21/954, G06T 7/00

(54) **VERFAHREN UND COMPUTERPROGRAMMPRODUKT ZUR AUTOMATISIERTEN DEFEKTDETEKTION BEI EINER TRIEBWERKS-BOROSKOPIE**
METHOD AND COMPUTER PROGRAM PRODUCT FOR AUTOMATED DEFECT DETECTION IN A POWER PLANT BORESCOPE INSPECTION
PROCÉDÉ ET PRODUIT PROGRAMME INFORMATIQUE POUR LA DÉTECTION AUTOMATISÉE D'ERREURS D'UNE BOROSCOPIE SUR MOTEUR

(30) Priorität: 29.08.2019 EP 19194447
(43) Veröffentlichungstag der Anmeldung: 06.07.2022
(73) Patentinhaber: Lufthansa Technik AG, 22335 Hamburg (DE)
(72) Erfinder: HUBERT, Wiebke, 22765 Hamburg (DE); PETERS, Jan Oke, 22339 Hamburg (DE); LANG, Eva, 60486 Frankfurt/Main (DE); PLATHO, Matthias, 55130 Mainz (DE); APPEL, Alexander, 61206 Wöllstadt (DE)
(74) Vertreter: Glawe, Delfs, Moll
(86) Internationale Anmeldenummer: PCT/EP2020/073808
(87) Internationale Veröffentlichungsnummer: WO 2021/037885

(56) Entgegenhaltungen:
- EP-A1- 3 276 131
- EP-A1- 3 327 428
- EP-A2- 2 363 575
- JP-A- 2007 163 723
- JP-A- 2014 032 363
- JP-A- 2014 215 395
- US-A1- 2004 183 900
- US-A1- 2007 132 840
- US-A1- 2011 025 844
- US-A1- 2013 113 915
- US-A1- 2013 162 846
- US-A1- 2016 314 571
- ADAM W ET AL: "BILDAUSWERTUNG ZUR PRUFUNG VON WERKSTUCKINNENFLACHEN. ÖEVALUATION OF IMAGES FOR TESTING THE INSIDE FACES OF WORKPIECES", ZWF ZEITSCHRIFT FUR WIRTSCHAFTLICHE FERTIGUNG UNDAUTOMATISIERUNG, CARL HANSER VERLAG. MUNCHEN, DE, vol. 91, no. 4, 1 April 1996 (1996-04-01), pages 138 - 141, XP000587756, ISSN: 0947-0085

## Beschreibung

Die Erfindung betrifft ein Verfahren und Computerprogrammprodukt zur automatisierten Defektdetektion bei einer Triebwerks-Boroskopie.

Triebwerke, insbesondere Strahltriebwerke von Flugzeugen müssen regelmäßig inspiziert werden, um die Einhaltung der technischen Sicherheitsanforderungen zu überprüfen und evtl. Beschädigung frühzeitig zu erkennen. Insbesondere für Inspektionen während das Strahltriebwerk am Flugzeug montiert ist (onwing), werden seitliche Klappen am Strahltriebwerk geöffnet und/oder einzelne Bauteile entfernt, sodass ein Inspekteur unmittelbar oder mit Hilfe eines Boroskops ins Innere des Strahltriebwerks blicken kann, um die Triebwerksschaufeln zu inspizieren. Es ist dabei die Aufgabe des Inspekteurs, unmittelbar am Okular des Boroskops oder - im Falle eines Video-Boroskops - am daran angeschlossenen Videomonitor die Triebwerksschaufeln zu begutachten und Defekte an den Triebwerksschaufeln, wie bspw. Kerben oder Beulen, im Zehntel-Millimeterbereich sicher zu identifizieren.

Dabei ist zur Inspektion der Triebwerksschaufeln einer einzelnen drehbaren Triebwerksstufe des Strahltriebwerkes bekannt, diese durch Drehen der Triebwerksstufe so an einer Sichtöffnung des Strahltriebwerks oder an einem in das Strahltriebwerk eingeführten Boroskop vorbeizuführen, dass nacheinander sämtliche Triebwerksschaufeln der Triebwerksstufe des Strahltriebwerkes in der Sichtöffnung oder dem Blickfeld des Boroskops begutachtet werden können.

Für die Inspektion sämtlicher Triebwerksstufen eines Strahltriebwerkes werden mehrere Stunden benötigt; allein für die Inspektion der neun Stufen des Hochdruckverdichters eines CFM56-Triebwerks müssen vier Stunden veranschlagt werden. Als Ergebnis liegt dann eine Auswertung durch den Inspekteur vor, die den optischen Eindruck des Inspekteurs wiedergibt, jedoch regelmäßig nicht die Anforderungen an eine standardisierte Befundung erfüllt.

Das Dokument JP 2014-32363 A offenbart ein Video-Endoskop zur Inspektion von Turbinenschaufeln einer Gasturbine, bei der im Bereich des Bilderfassungssensors Düsen vorgesehen sind, an denen gesteuert Druckluft austreten kann, die derart mit den Turbinenschaufeln zusammenwirken kann, dass die betroffene Turbinenstufe in Rotation versetzt oder ab¬gebremst wird. Durch Kantenauswertung in zeitlicher Abfolge aufgenommener Bilder kann die Rotationsgeschwindigkeit der Turbinenstufe ermittelt und darüber letztendlich geregelt werden.

Es ist Aufgabe der vorliegenden Erfindung, ein Verfahren zu schaffen, mit dem die Inspektion der Triebwerksschaufeln drehbarer Triebwerksstufen eines Strahltriebwerkes verbessert werden kann.

Gelöst wird diese Aufgabe durch ein Verfahren gemäß dem Hauptanspruch. Vorteilhafte Weiterbildungen sind Gegenstand der abhängigen Ansprüche.

Demnach betrifft die Erfindung ein Verfahren zur automatisierten Defektdetektion bei einer Triebwerks-Boroskopie, bei der ein Video-Boroskop derart in ein Triebwerk eingeführt ist, dass bei Drehen einer Triebwerkswelle die daran befestigten Triebwerksschaufeln einer Triebwerkstufe nacheinander durch den Bildbereich des Video-Boroskops bewegt werden, gekennzeichnet durch die Schritte:
- Identifizieren eines möglichen Defektes an einer Triebwerksschaufel durch Bilderkennung auf Basis eines Einzelbildes des Video-Boroskops;
- Erfassen der Bewegung der Triebwerksschaufeln im Bildbereich des Video-Boroskops durch Vergleich jeweils zweier aufeinanderfolgender Einzelbilder;
- Verfolgen des möglichen Defekts auf dem Videobild entlang der erfassten Bewegung durch optische Bilderkennung auf Basis der zur Bewegungserfassung verwendeten Einzelbilder;
- Wenn die Spur eines möglichen Defekts auf dem Videobild über eine vorgegebene Länge mit der erfassten Bewegung in Richtung und Geschwindigkeit übereinstimmt: Identifizieren des möglichen Defekts als tatsächlichen Defekt.

Die Erfindung betrifft weiterhin ein Computerprogrammprodukt umfassend Programmteile, welche, wenn geladen in einem Computer zur Durchführung des erfindungsgemäßen Verfahrens ausgelegt sind.

Zunächst werden einige in Zusammenhang mit der Erfindung verwendete Begriffe erläutert.

Bei einem "Video-Boroskop" handelt es sich um ein Boroskop, welches ein kontinuierliches analoges oder digitales Videobild des Bildbereichs des Boroskops für die weitere Verarbeitung bereitstellt. Dabei kann das von einer Optik am freien Ende des Boroskop aufgenommene Bild über eine optische Leitung zu einer Kamera am anderen Ende des Boroskops geleitet und dort zu dem gewünschten Videobild gewandelt werden. Es ist aber auch möglich, dass unmittelbar am freien Ende des Boroskops das aufgenommene Bild durch einen geeigneten Chip (bspw. CCD-oder CMOS-Chip) in ein Videobild gewandelt wird, das dann über eine Datenleitung zum anderen Ende des Boroskop übermittelt wird und dort für weitere Verarbeitung zu Verfügung steht.

Bei dem "Videobild" handelt es sich um eine kontinuierliche Sequenz aus "Einzelbildern", bei welcher der zeitliche Abstand zwischen der Aufnahme der Einzelbilder in der Regel konstant ist, weshalb auch auf die Bildwiederholrate als Maß für die Anzahl der Einzelbilder pro vorgegebenen Zeitabschnitt zurückgegriffen werden kann.

Bei "zwei aufeinanderfolgenden Einzelbilder" handelt es sich um zwei zeitlich aufeinanderfolgende Einzelbilder. Es muss sich dabei nicht zwangsläufig um zwei unmittelbar aufeinanderfolgende Bilder des Videobildes handeln. Es ist auch möglich, dass das Videobild zwischen den beiden aufeinanderfolgenden Einzelbildern noch Zwischenbilder umfasst, die aber zumindest bei der erfindungsgemäßen Ermittlung der Bewegung der Triebwerksschaufeln im Bildbereich des Video-Boroskops nicht berücksichtigt werden.

Die Erfindung stellt ein Verfahren zur Verfügung, mit dem die anspruchsvolle, aber auch monotone Tätigkeit der Einzelbegutachtung der Vielzahl von Triebwerksschaufeln eines Flugzeugtriebwerks, wenigstens zum Teil automatisiert werden kann. Damit diese (Teil-)Automatisierung der Triebwerksinspektion überhaupt in Betracht gezogen werden kann, ist eine hohe Zuverlässigkeit der Defektdetektion erforderlich. Mit dem erfindungsgemäßen Verfahren wird dies erreicht, da sowohl falsch negative als auch falsch positive Ergebnisse derart stark reduziert werden können, dass die Fehlerquote des erfindungsgemäßen Verfahrens vergleichbar, wenn nicht sogar geringer ist als bei einer manuellen Inspektion.

Das erfindungsgemäße Verfahren beruht dabei auf der bei der Triebwerks-Boroskopie bekannten Anordnung, bei der ein Video-Boroskop durch eine geeignete Öffnung in ein Flugzeugtriebwerk eingeführt und so ausgerichtet wird, dass sich wenigstens eine Triebwerksschaufel der zu untersuchenden Triebwerksstufe im Bildbereich des Video-Boroskops befindet. In der Folge lässt sich durch Drehen derjenigen Triebwerkswelle, an der die Triebwerksschaufeln der zu untersuchenden Triebwerkstufe befestigt sind, die einzelnen Triebwerksschaufeln der Triebwerksstufe nacheinander durch den Bildbereich des Video-Boroskops bewegen.

Auch wenn im Folgenden aus Gründen der Übersichtlichkeit davon ausgegangen wird, dass der Bildbereich des Video-Boroskops grundsätzlich ausreichend groß ist, um die Triebwerksschaufeln mit ihrer gesamten Schaufellänge zu erfassen, eignet sich das erfindungsgemäße Verfahren auch zur Begutachtung von einzelnen Längsabschnitten der Triebwerksschaufeln. Durch ausreichende Wiederholung des Verfahrens für die einzelnen Längsabschnitte kann dann eine vollständige Inspektion der Triebwerksschaufeln einer Triebwerksstufe über deren gesamte Schaufellänge durchgeführt werden.

Auf den Einzelbildern des Videobildes oder zumindest einem Teil davon, werden mithilfe von Bilderkennung mögliche Defekte an der oder den im Bild befindlichen Triebwerksschaufeln identifiziert. Es handelt sich in diesem Stadium zunächst lediglich um "Defekt-Kandidaten", also um solche durch die Bilderkennung identifizierbaren Besonderheiten an den Triebwerksschaufeln, die möglicherweise einen Defekt darstellen können.

Indem das Video-Boroskop nicht nur bei Bedarf Einzelbilder aufnimmt, sondern ein kontinuierliches Videobild bereitstellt, kann durch Vergleich jeweils zweier aufeinanderfolgender Einzelbilder eine mögliche Bewegung der Triebwerksschaufeln erfasst werden. Eine solche Bewegung kann regelmäßig nur durch Drehen der Triebwerkswelle, an der die durch das Video-Boroskop beobachteten Triebwerksschaufeln befestigt sind, erreicht werden. Indem erfindungsgemäß die Bewegung der Triebwerksschaufeln allein anhand des Videobildes erfasst ist, ist es unerheblich, wie die Drehbewegung der Triebwerkswelle tatsächlich erreicht wird. Selbst ein manuelles Drehen der Triebwerkswelle bleibt möglich, womit das erfindungsgemäße Verfahren flexibel einsetzbar ist.

Wird eine Bewegung der Triebwerksschaufeln erfasst, wird der zuvor identifizierte mögliche Defekt auf den Videobildern entlang der erfassten Bewegung verfolgt. Dazu wird auf eine optische Bilderkennung auf diejenigen Einzelbilder des Videobildes angewandt, die auch zur Erfassung der Bewegung genutzt werden. Hierbei ist es möglich, die Bilderkennung jeweils auf die gesamten Einzelbilder anzuwenden, um so bspw. auch neu in den Bildbereich des Video-Boroskops mögliche Defekte identifizieren zu können (siehe oben), oder aber die Bilderkennung auf diejenigen Bereiche der Einzelbilder zu beschränken, in denen sich gemäß der erfassten Bewegung der mögliche Defekt befinden müsste, was erheblich Rechenleistung einsparen kann. Es ist auch eine Kombination der beiden Möglichkeiten denkbar, bspw. wird jedes vierte Einzelbild vollständig der Bilderkennung zugeführt, während für die dazwischenliegenden Einzelbilder jeweils nur die Bereiche, in denen sich zuvor identifizierte mögliche Defekte befinden müssten, analysiert werden.

Wird ein initial identifizierter möglicher Defekt auf mehreren aufeinanderfolgenden Einzelbildern wiederholt durch die Bilderkennung identifiziert, ergibt sich so eine Spur des möglichen Defektes über die Einzelbilder. Stimmt diese Spur in Richtung und Geschwindigkeit mit der auf Basis derselben Einzelbilder erfassten Bewegung der Triebwerksschaufeln überein, und weist die Spur darüber hinaus auch noch eine vorgegebene Länge auf, kann der zuvor nur als möglicher Kandidat eingestufte Defekt als tatsächlicher Defekt identifiziert werden.

Indem sich das erfindungsgemäße Verfahren nicht auf die Bilderkennung von Einzelbildern zur Identifizierung von Defekten verlässt, können falsche Ergebnisse - bspw. aufgrund von Lichtreflexen, Schattenwurf, Verschmutzungen, Staub etc. - vermieden werden. Nur wenn ein möglicher Defekt sich über mehrere Einzelbilder hinweg, bei denen der mögliche Defekt aufgrund der Bewegung der Triebwerksschaufeln an anderer Stelle befindet, jeweils als möglicher Defekt identifiziert und somit bestätigt wird, kann mit sehr hoher Wahrscheinlichkeit davon ausgegangen werden, dass es sich tatsächlich um einen Defekt handelt. Andersherum gilt, dass wenn ein möglicher Defekt nur auf einzelnen, zeitlich nicht aufeinanderfolgenden Einzelbildern identifiziert wird, mit sehr hoher Wahrscheinlichkeit davon ausgegangen werden kann, dass es sich nicht um einen tatsächlichen Defekt handelt.

Es hat sich gezeigt, dass mit dem erfindungsgemäßen Verfahren eine Defekterkennungsgenauigkeit zumindest vergleichbar zu der einer manuellen Inspektion erreicht werden kann. Häufig kann sogar ein besseres Ergebnis erzielt werden.

Unter anderem um die gemäß dem erfindungsgemäßen Verfahren identifizierten Defekte einfach überprüfen zu können, ist bevorzugt, wenn die Erfassung der Bewegung der Triebwerksschaufeln dazu genutzt wird, die Position der einzelnen Triebwerksschaufeln gegenüber einer arbiträr gewählten Ausgangs-Triebwerksschaufel zu identifizieren. Wird beispielsweise die bei der ersten Identifizierung eines möglichen Defektes anhand des Videobildes am vollständigsten im Bildbereich des Video-Boroskops befindliche Triebwerksschaufel als Ausgangs-Triebwerksschaufel angenommen, können die anderen Triebwerksschaufeln in ihrer relativen Position gegenüber der Ausgangs-Triebwerksschaufel durch entsprechende Berücksichtigung der erfassten Bewegung eindeutig bestimmt werden. Bspw. ist es so möglich, die einzelnen Triebwerksschaufeln ausgehend von der Ausgangs-Triebwerksschaufel "durchzunummerieren". Dadurch kann durch geeignete Drehung der Triebwerkswelle unter Erfassung der Bewegung eine bestimmte, bereits analysierte Triebwerksschaufel in den Bildbereich des Video-Boroskops zu bewegen, damit so bspw. ein Inspekteur den durch das Verfahren detektierten Defekt auf der fraglichen, anhand der Nummerierung eindeutig identifizierbaren Triebwerksschaufel nochmals anhand eines Live-Videobildes überprüfen kann, um so die Defektdetektion zu bestätigen oder abzulehnen. Beim Nummerieren der Triebwerksschaufeln kann die Drehrichtung der Triebwerkswelle berücksichtigt werden, sodass die Nummerierung bspw. grundsätzlich im Uhrzeigersinn aufsteigend ist.

Es ist bevorzugt, wenn das Verfahren das Steuern der Drehbewegung umfasst. Die Steuerung der Drehbewegung kann bspw. durch geeignetes Ansteuern des Luftstarters des Flugzeugtriebwerks oder eines zeitweise am Flugzeugtriebwerk angeordneten externen Antrieb erfolgen. Auch wenn allein aufgrund einer entsprechenden Steuerung regelmäßig keine genaue Bestimmung der Bewegung der Triebwerksschaufeln im Bildbereich des Video-Boroskops möglich ist, kann dennoch zumindest das Vorliegen einer solchen Bewegung an sich sowie insbesondere die grundsätzliche Richtung der Bewegung bei dem Vergleich zweier aufeinanderfolgender Einzelbilder zur Erfassung der Bewegung berücksichtigt werden, wobei insbesondere die Vorgabe der Richtung die letztendliche Erfassung der Bewegung vereinfachen kann. Darüber hinaus kann durch geeignete Steuerung der Drehbewegung sichergestellt werden, dass sich die Triebwerksschaufeln nur in einer ausreichend geringen Geschwindigkeit durch den Bildbereich des Boroskops bewegen, damit ihre Bewegung anhand der Einzelbilder noch erfasst werden kann und ggf. auch deren Position der einzelnen Triebwerksschaufeln gegenüber einer arbiträr gewählten Ausgangs-Triebwerksschaufel identifizieren zu können.

Für die Erfassung der Bewegung der Triebwerksschaufeln ist es bevorzugt, wenn die Einzelbilder in Bereiche segmentiert werden, welche die Umrisse der einzelnen Triebwerksschaufeln exakt widerspiegeln, wobei der übrige Bereich dann als Nicht-Schaufel-Bereich identifiziert werden kann. Im Vergleich zu Bilderfassungsverfahren, bei denen eine Begrenzungsbox um bestimmte, in einem Bild enthaltene Objekte ermittelt wird, ergibt die Segmentierung den genauen Umriss des sichtbaren Teils bspw. einer Triebwerksschaufel. Dies ermöglicht eine genauere Zuordnung der einzelnen Bildbereiche zu einzelnen Triebwerksschaufeln. Die Segmentierung kann bspw. mit einem Convolutional Neural Network, wie bspw. der Mask-RCNN-Methode vorzugsweise umfassend einen Inception Feature Extractor, wie er von He, Gkioxari, Dollar und Girshick im Artikel "Mask R-CNN" (ar-Xiv.org, Dokumentennummer 1703.06870v3) beschrieben ist, erfolgen. Die Bewegungserfassung kann dann durch Veränderung der Segmentierung zweier zeitlich aufeinanderfolgender Einzelbilder erfolgen. Hierfür ist lediglich erforderlich, dass die Bewegung der Triebwerksschaufeln ausreichend langsam ist, dass sich die Position der einzelnen Triebwerksschaufeln von dem einen zum nächsten Einzelbild nicht zu stark verändern, und insbesondere dass eine bestimmte Triebwerksschaufel auf mehr als zwei zur Erfassung der Bewegung herangezogenen aufeinanderfolgenden Einzelbildern abgebildet ist. Letzteres lässt sich durch geeignete Wahl von Bildwiederholrate des Video-Boroskops, geeignete Wahl der Anzahl der zwischen zwei Einzelbildern liegenden, nicht zu beachteten Zwischenbilder und/oder Geschwindigkeit der Bewegung der Triebwerksschaufeln im Bildbereich des Video-Boroskops sichergestellt werden.

Um die erforderliche Rechenleistung für die Segmentierung von Einzelbildern zu reduzieren, ist es bevorzugt, wenn Ausschlussbereiche festgelegt sind, in denen keine Segmentierung der Einzelbilder erfolgt. Sind bspw. Bereiche im Video-Bild enthalten, die sich auch bei Bewegung der Triebwerksschaufeln nicht verändern - wie bspw. Statorschaufeln oder feststehende Wände - können diese durch Vorgabe geeigneter Ausschlussbereiche vor der Segmentierung ausgenommen werden, sodass die Segmentierung lediglich für einen Ausschnitt der Einzelbilder erfolgen muss.

Unabhängig davon, ob die Erfassung der Bewegung über die beschriebene Segmentierung und den anschließenden Vergleich von aufeinanderfolgenden Einzelbildern oder eine beliebige andere Methode erfolgt, ist es bevorzugt, wenn eine Bewegungsrichtung der Triebwerksschaufeln im Bildbereich des Video-Boroskops vorgegeben ist, die dann bei der tatsächlichen Bewegung auch eingehalten wird. Ist eine Bewegungsrichtung vorgegeben, reduziert sich der Rechenaufwand der Zuordnung der einzelnen Turbinenschaufeln bzw. der einzelnen Turbinenschaufelsegmente bei einer Bewegung. Die Vorgabe der Bewegungsrichtung der Turbinenschaufeln im Bildbereich des Video-Boroskops entspricht dabei grundsätzlich einer Vorgabe der Drehrichtung für die Drehung der Triebwerkswelle, an der die fraglichen Turbinenschaufeln befestigt sind.

Das eigentliche Identifizieren von Defekten an den Triebwerksschaufeln, wie bspw. Kerben oder Beulen, erfolgt bevorzugt mithilfe eines Convolutional Neural Network, z.B. eines Faster-RCNN-Verfahrens, wie es u.a. von Ren, He, Girshick und Sun im Artikel "Faster R-CNN: Towards Real-Time Object Detection with Region Proposal Networks" (arXiv.org, Dokumentennummer 1506.01497v3) beschrieben ist. Das Verfahren ist ausreichend schnell, um neben der initialen Defektidentifizierung auch zur Verfolgung eines möglichen Defekts bei Bewegung der Triebwerksschaufeln eingesetzt zu werden.

Sowohl das Mask-RCNN-Methode als auch das Faster-RCNN-Verfahren basieren auf Convolutional Neural Networks. Es kann aber grundsätzlich auch auf andere Deep-Learning-Verfahren zurückgegriffen werden. Insbesondere das letztendlich für die Defektidentifizierung verwendete Deep-Learning-Verfahren kann durch die oben beschrieben Bestätigung oder Ablehnung der Defektdetektion durch einen Inspekteur immer weiter verbessert werden. Im Übrigen ist es natürlich erforderlich, die verwendeten Deep-Learning-Verfahren vor deren erster Verwendung durch geeignete manuell bearbeitete oder bewertete Trainingsdatensätze jeweils umfassend Einzelbilder, auf denen die später automatisiert zur erkennenden Bereiche oder Merkmale markiert sind, zu trainieren. Je nach verwendeter Deep-Learning-Methode kann der Trainingsaufwand bzw. der Aufwand für die Erstellung von Trainingsdatensätzen verringert werden, indem ein einem Trainingsdatensatz zugrunde liegendes Einzelbild durch Spiegelung, Rotation oder Anpassung von Kontrast und/oder Helligkeit in einen weiteren Trainingsdatensatz überführt wird, wobei die letztendliche aufwendige Markierung der Einzelbilder - ggf. mit vergleichbarer Spiegelung und/oder Rotation - übernommen werden kann, ohne dass manuelle Nacharbeit erforderlich wäre.

Zur Erläuterung des Computerprogrammprodukts wird auf die vorstehenden Ausführungen verwiesen.

Die Erfindung wird nun anhand eines Ausführungsbeispiels unter Bezugnahme auf die beigefügten Zeichnungen weiter beschrieben. Es zeigen:
- Figur 1:: eine zur Durchführung des erfindungsgemäßen Verfahrens ausgebildete Anordnung;
- Figur 2a, b:: zwei Serien von, vom Video-Boroskop der Anordnung gemäß Figur 1 aufgenommenen aufeinanderfolgenden Einzelbildern;
- Figur 3:: eine exemplarische Darstellung der Segmentierung von Einzelbildern; und
- Figur 4a, b:: eine exemplarische Darstellung der Bewegungserkennung und Bestimmung der relativen Position von Triebwerksschaufeln anhand segmentierter Einzelbilder.

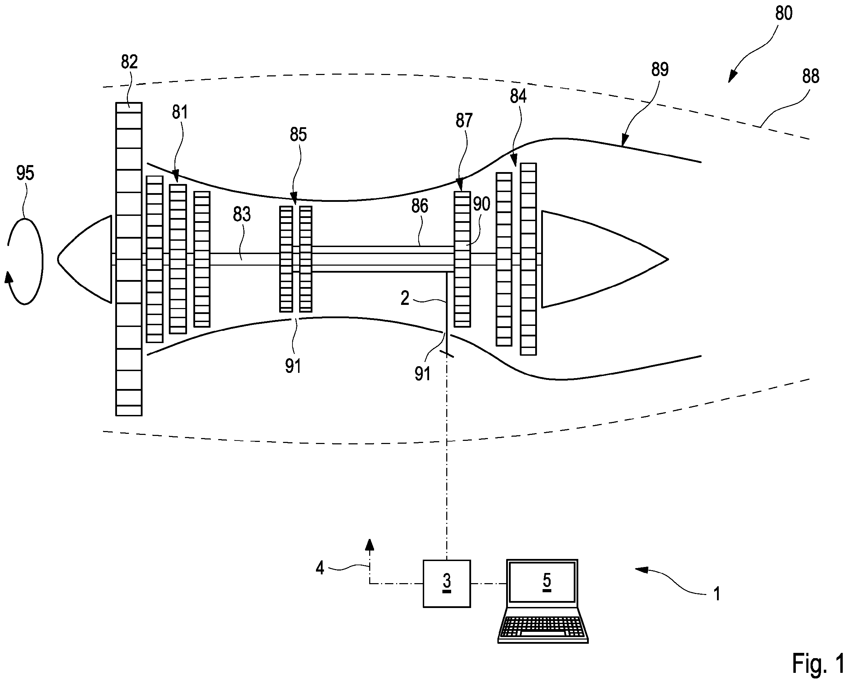

In Figur 1 ist exemplarisch eine beispielhafte, zur Durchführung des erfindungsgemäßen Verfahrens ausgebildete Anordnung 1 während der Verwendung zur Boroskopinspektion eines - in der Figur nur angedeuteten - Flugzeugtriebwerks 80 gezeigt.

Bei dem Flugzeugtriebwerk 80 handelt es sich um ein Mantelstromtriebwerk mit einer Niederdruck-Kompressorstufe 81 umfassend den Fan 82, die über eine erste Welle 83 mit einer Niederdruck-Turbine 84 verbunden ist, sowie einer Hochdruck-Kompressorstufe 85, die über eine zweite Welle 86 mit einer Hochdruck-Turbinenstufe 87 verbunden ist. Die zwischen der Hochdruck-Kompressorstufe 85 und Hochdruck-Turbinenstufe 87 angeordnete Brennkammer ist aus Gründen der Übersichtlichkeit nicht in Figur 1 gezeigt.

Für die Inspektion der Triebwerksschaufeln 90 der einzelnen Stufen 81, 84, 85 und 87 ist die Triebwerksabdeckung 88 geöffnet (und daher gestrichelt dargestellt), sodass der Zugang zum Kerntriebwerk 89 frei ist. Am Kerntriebwerk 89 sind verschiedene Boroskopöffnung 91 vorgesehen, in welche wahlweise ein Video-Boroskop 2 eingeführt werden kann. In Figur 1 sind exemplarisch zwei Boroskopöffnungen 91 gezeigt, in die jeweils ein Boroskop 2 eingeführt werden kann, um so die Triebwerksschaufeln 90 einer bestimmten Turbinenstufe - im dargestellten Beispiel entweder der Hochdruck-Kompressorstufe 85 oder der Hochdruck-Turbinenstufe 87 - durch das Boroskop 2 zu begutachten. Durch Drehen derjenigen Welle 83, 86, an der die zu begutachtenden Triebwerksschaufeln 90 befestigt sind - im Beispiel also die zweite Welle 86 - können sämtliche Triebwerksschaufeln 90 der im Bildbereich des Boroskops 2 befindlichen Triebwerksstufe nacheinander begutachtet werden. Hierfür ist eine Drehrichtung vorgegeben, die durch den Pfeil 95 angedeutet ist. Die eigentliche Drehung der zweiten Welle 86 erfolgt durch eine nicht dargestellte, in das Flugzeugtriebwerk 80 integrierte Antriebseinheit.

Das Video-Boroskop 2 ist mit einer Rechnereinheit 3 verbunden, die zur nachfolgend beschriebenen Verarbeitung des von dem Video-Boroskop 2 stammenden Videobildes ausgebildet ist. Darüber hinaus umfasst die Rechnereinheit 3 noch über einen Ausgang 4 zur Anbindung an die Steuerungseinheit des Flugzeugtriebwerks 80, um darüber die Antriebseinheit für die zweite Welle 86 zu steuern. Mit der Rechnereinheit 3 ist weiterhin ein Terminal 5 verbunden, über welches das Videobild oder Einzelbilder daraus durch einen Inspekteur begutachtet werden können.

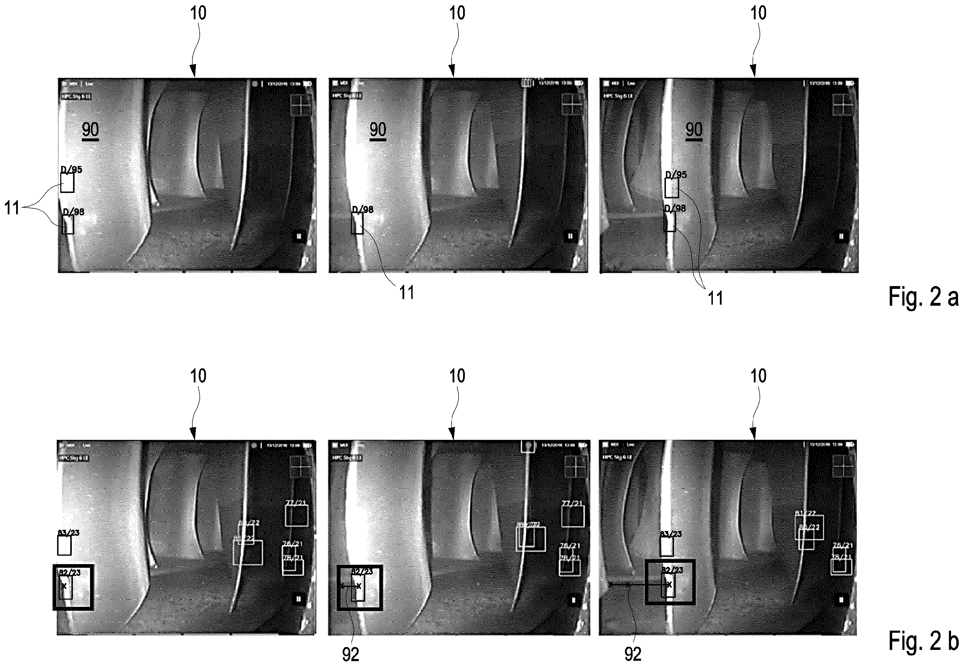

In Figur 2a sind exemplarisch von links nach rechts drei zeitlich aufeinanderfolgende Einzelbilder des von dem Video-Boroskops 2 gemäß Figur 1 aufgenommenen Videobildes einer einzelnen Stufe der Hochdruck-Turbinenstufe 87 gezeigt. Zwischen den gezeigten Einzelbildern liegen jeweils noch zwei Zwischenbilder, die bei der nachfolgend beschriebenen Verarbeitung jedoch nicht berücksichtigt werden und daher auch in der Darstellung der Figur 2a weggelassen werden können.

Aufgrund einer durch die Rechnereinheit 3 über den Ausgang 4 initiierten Drehung der zweiten Welle 86 in die in Figur 1 gezeigte Drehrichtung 95 bewegen sich die Triebwerksschaufeln 90 der Triebwerksstufe 87 durch das Bildfeld des Video-Boroskops 2. In der Folge bewegt sich die gezeigte Triebwerksschaufel 90 in den Einzelbildern der Figur 2a von links nach rechts.

Für jedes der Einzelbilder 10 gemäß Figur 2a wird eine Bilderkennung durchgeführt, um mögliche Defekte zu erkennen. Für die Defekterkennung wird auf ein geeignet trainiertes Faster-RCNN-Verfahren zurückgegriffen, welche insbesondere auf die Erkennung von Kerben und Dellen trainiert ist. Sämtliche mögliche Defekte auf den Einzelbildern gemäß Figur 2a sind durch einen Kasten 11 markiert.

Die Einzelbilder 10 gemäß Figur 2a werden auch genutzt, um die Bewegung der Triebwerksschaufeln 90 im Bildbereich des Video-Boroskops 2 zu ermitteln.

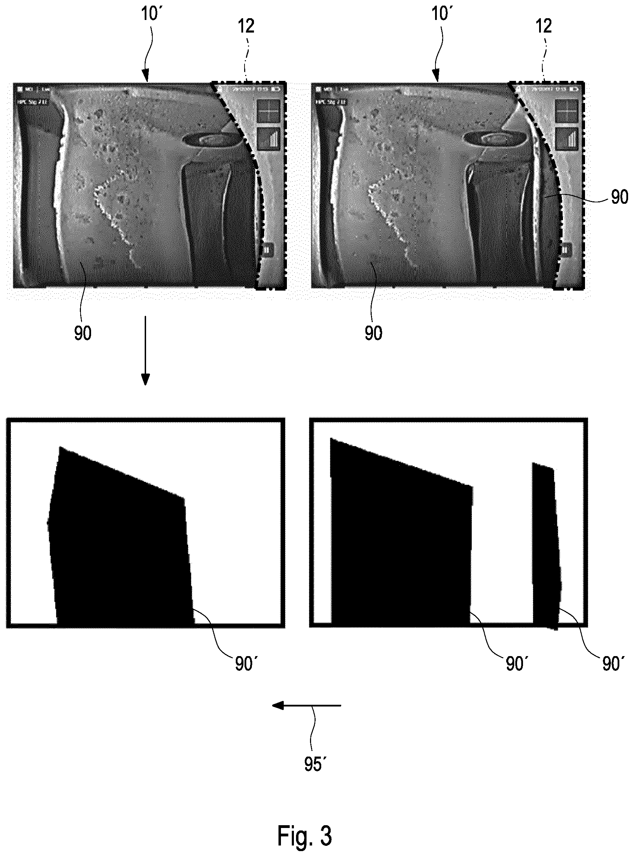

Wie in Figur 3 exemplarisch anhand anderer Einzelbilder 10` eines von einem Boroskop 2 aufgenommenen Videobildes gezeigt, wird jedes Einzelbild 10` mithilfe einer Mask-RCNN-Methode mit Inception Feature Extractor in einzelne Triebwerkschaufelbereiche 90' segmentiert (Figur 3, unten).

Dabei ist ein durch Strichpunktlinien angedeuteter Ausschlussbereich 12 festgelegt, in dem keine Segmentierung der Einzelbilder 10` erfolgen muss, da sich in diesem Bereich 12 des Videobildes ein stationäres Element befindet und somit ausgeschlossen ist, dass in diesem Bereich eine Triebwerksschaufel 90 zu sehen sein wird. Durch die Definition eines Ausschlussbereichs 12 kann die für die Segmentierung erforderliche Rechenleistung reduziert werden.

Da die Rechnereinheit 3 über den Ausgang 4 die zweite Welle 86 in Richtung 95 in Drehung versetzt hat, womit die grundsätzliche Bewegungsrichtung der Triebwerksschaufeln 90 im Bildbereich des Boroskops 2 bekannt ist, kann auf einfache Weise anhand der Triebwerkschaufelbereiche 90' die Geschwindigkeit und Richtung der Bewegung der Triebwerksschaufeln 90` festgestellt werden, die in Figur 3 durch den Vektor 95` angedeutet ist.

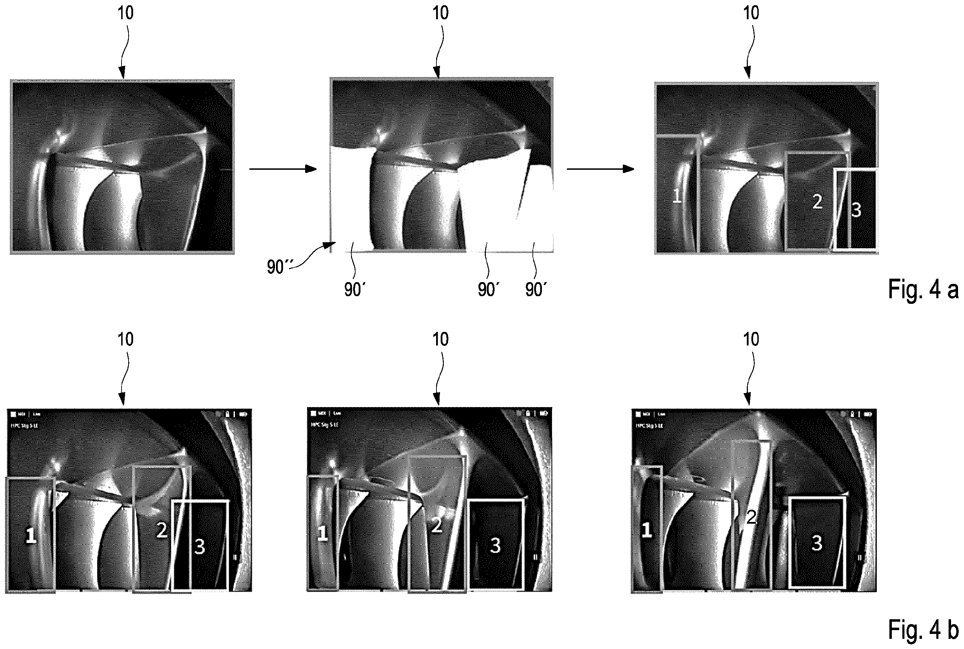

Durch die vorgesehene Segmentierung der Einzelbilder 10` wird neben der Erfassung der Bewegung der Triebwerksschaufeln 90 noch ermöglicht, die relative Position der einzelnen Triebwerksschaufeln 90 gegenüber einer arbiträr gewählten Ausgangs-Triebwerksschaufel 90" zu bestimmten, was nachfolgend anhand der Figuren 4a und b näher erläutert wird.

Wie in Figur 4a dargestellt wird ein Einzelbild 10"zunächst gemäß Figur 3 segmentiert, wobei - sofern eine entsprechende Auswahl noch nicht getroffen wurde - eines der Triebwerksschaufelsegmente 90' als Ausgangs-Triebwerksschaufel 90" festgelegt wird. In der Folge lassen sich die Triebwerksschaufeln 90 bzw. die Triebwerksschaufelsegmente 90' ausgehend von der Ausgangs-Triebwerksschaufel 90" durchnummerieren.

Anschließend kann unter Berücksichtigung der erfassten Bewegung der Triebwerksschaufeln 90 jedem Triebwerksschaufelsegment 90' eine eindeutige Nummer zugeordnet werden, die einem Durchzählen der einzelnen Triebwerksschaufeln 90 bzw. Triebwerksschaufelsegmente 90' entspricht (vgl. Figur 4b). Durch die so erfasste Position der einzelnen Triebwerksschaufeln 90 ist es möglich, einzelne Triebwerksschaufeln 90, deren Position erfasst wurde, durch entsprechende Ansteuerung des Antriebs der Welle 86 über den Ausgang 4 der Rechnereinheit 3 und gleichzeitiger Überprüfung gemäß Figur 4a, b gezielt angefahren werden, um so bspw. die Nachkontrolle eines bestimmten identifizierten möglichen Defekts an der entsprechenden Triebwerksschaufeln 90 anhand eines Live-Videobildes über das Terminal 5 zu ermöglichen.

Bereits auf Basis der gemäß Figur 3 erfassten Bewegung der Triebwerksschaufeln 90 können die in Figur 2a identifizierten möglichen Defekte auf dem Videobild, genauer auf den für die Bewegungserfassung verwendeten Einzelbildern 10 verfolgt werden. Dazu wird für die fraglichen Einzelbilder 10 jeweils eine optische Bilderkennung durchgeführt, wobei - wie im vorliegenden Fall - auf die in Zusammenhang mit Figur 2a beschriebene Bilderfassung zur Identifizierung möglicher Defekte bzw. deren Ergebnisse zurückgegriffen werden kann. In Kombination mit der erfassten Bewegung kann für die einzelnen möglichen Defekte, sofern sie sich auf sämtlichen Einzelbildern wiederfinden, eine Spur 92 über das Videobild ermittelt werden, wie sie in Figur 2b dargestellt ist. Weist eine der so ermittelten Spuren 92 eine Länge auf, die über einer vorgegebenen Länge liegt, kann der die Spur 92 bildende möglicher Defekt als tatsächlicher Defekt identifiziert werden, was auf geeignete Weise standardisiert dokumentiert werden kann.

Ist für einen möglichen Defekt keine ausreichend lange, durchgehende Spur 92 zu ermitteln, bspw. weil auf einem Einzelbild 10 kein, einer bestimmten Spur 92 zuordenbarer Defekt identifiziert werden konnte, handelt es sich bei dem möglichen Defekt mit hoher Wahrscheinlichkeit um keinen tatsächlichen Defekt. Ein solch möglicher Defekt kann dennoch dokumentiert werden und insbesondere, wie oben angesprochen, durch gezieltes Anfahren der Triebwerksschaufel 90 mit dem möglichen Defekt noch mal von einem Inspekteur über das Terminal 5 begutachtet werden, um die automatisiert ermittelte Einschätzung zu verifizieren. Gleiches gilt natürlich auch für die als tatsächliche identifizierte Defekte.

Die Ergebnisse der Verifizierung durch einen Inspekteur können zur Optimierung der Bilderkennung von möglichen Defekten herangezogen werden.

## Patentansprüche

1. Verfahren zur automatisierten Defektdetektion bei einer Triebwerks-Boroskopie, bei der ein Video-Boroskop (2) derart in ein Triebwerk (80) eingeführt ist, dass bei Drehen einer Triebwerkswelle (83, 86) die daran befestigten Triebwerksschaufeln (90) einer Triebwerkstufe (81, 84, 85, 87) nacheinander durch den Bildbereich des Video-Boroskops (2) bewegt werden, wobei die folgenden Schritte durchgeführt werden:
- Identifizieren eines möglichen Defektes an einer Triebwerksschaufel (90) durch Bilderkennung auf Basis eines Einzelbildes (10) des Video-Boroskops;
- Erfassen der Bewegung der Triebwerksschaufeln (90) im Bildbereich des Video-Boroskops durch Vergleich jeweils zweier aufeinanderfolgender Einzelbilder (10, 10');
- Verfolgen des möglichen Defekts auf dem Videobild entlang der erfassten Bewegung durch optische Bilderkennung auf Basis der zur Bewegungserfassung verwendeten Einzelbilder (10, 10');
- Wenn die Spur (92) eines möglichen Defekts auf dem Videobild über eine vorgegebene Länge mit der erfassten Bewegung in Richtung und Geschwindigkeit übereinstimmt: Identifizieren des möglichen Defekts als tatsächlichen Defekt.

2. Verfahren nach Anspruch 1,
**dadurch gekennzeichnet, dass**
die Erfassung der Bewegung der Triebwerksschaufeln (90) dazu genutzt wird, die Position der einzelnen Triebwerksschaufeln gegenüber einer arbiträr gewählten Ausgangs-Triebwerksschaufel zu identifizieren.

3. Verfahren nach einem der vorhergehenden Ansprüche,
**dadurch gekennzeichnet, dass**
das Verfahren das Steuern der Drehbewegung der Triebwerksachse umfasst.

4. Verfahren nach einem der vorhergehenden Ansprüche,
**dadurch gekennzeichnet, dass**
für die Erfassung der Bewegung der Triebwerksschaufeln die Einzelbilder in einzelne Schaufelbereiche segmentiert werden, vorzugsweise mit einer Mask-RCNN-Methode, weiter vorzugsweise umfassend einen mit Inception Feature Extractor.

5. Verfahren nach Anspruch 4,
**dadurch gekennzeichnet, dass**
Ausschlussbereiche festgelegt sind, in denen keine Segmentierung der Einzelbilder erfolgt.

6. Verfahren nach einem der vorhergehenden Ansprüche,
**dadurch gekennzeichnet, dass**
eine Bewegungsrichtung für die Turbinenschaufeln im Bildbereich des Video-Boroskops vorgegeben ist.

7. Verfahren nach einem der vorhergehenden Ansprüche,
**dadurch gekennzeichnet, dass**
die identifizierbaren möglichen Defekte Kerben und Dellen umfassen.

8. Computerprogrammprodukt umfassend Programmteile, welche, wenn geladen in einem Computer zur Durchführung des Verfahrens nach einem der Ansprüche 1 bis 7 ausgelegt sind.

## Claims

1. Method for automated defect detection during borescoping of an engine, in which a video borescope (2) is inserted into an engine (80) in such a way that, during rotation of an engine shaft (83, 86), the engine blades (90) of an engine stage (81, 84, 85, 87) which are secured to said engine shaft are moved successively through the image region of the video borescope (2), wherein the following steps are carried out:
- Identifying a possible defect on an engine blade (90) by image recognition on the basis of a frame (10) of the video borescope;
- Detecting the movement of the engine blades (90) in the image region of the video borescope by comparing in each case two successive frames (10, 10');
- Tracking the possible defect on the video image along the detected movement by optical image recognition on the basis of the frames (10, 10') used for detecting the movement;
- If the trace (92) of a possible defect on the video image corresponds to the detected movement in terms of direction and speed over a predefined length: identifying the possible defect as an actual defect.

2. Method according to Claim 1,characterized in thatthe detection of the movement of the engine blades (90) is used to identify the position of the individual engine blades vis-à-vis an arbitrarily chosen initial engine blade.

3. Method according to either of the preceding claims,characterized in thatthe method comprises controlling the rotational movement of the engine axle.

4. Method according to any of the preceding claims,characterized in thatfor the detection of the movement of the engine blades, the frames are segmented into individual blade regions, preferably by a mask RCNN method, with further preference comprising an inception feature extractor.

5. Method according to Claim 4,characterized in thatexclusion regions are defined in which the frames are not segmented.

6. Method according to any of the preceding claims,characterized in thata direction of movement for the engine blades in the image region of the video borescope is predefined.

7. Method according to any of the preceding claims, **characterized in that** • the possible defects that are identifiable comprise notches and dents.

8. Computer program product comprising program parts which, when loaded in a computer, are designed for carrying out the method according to any of Claims 1 to 7.

## Revendications

1. Procédé de détection automatisée de défauts lors d'une boroscopie de turbine, procédé dans lequel un vidéo-boroscope (2) est inséré dans une turbine (80) de manière à ce que, lorsqu'un arbre de turbine (83, 86) tourne, les pales de turbine (90), fixées à l'arbre de turbine, d'un étage de turbine (81, 84, 85, 87) sont déplacées l'une après l'autre à travers la zone d'image du vidéo-boroscope (2),
les étapes suivantes étant réalisées :
- identifier un éventuel défaut d'une pale de turbine (90) par reconnaissance d'image sur la base d'une image individuelle (10) du vidéo-boroscope ;
- détecter le mouvement des pales de turbine (90) dans la zone d'image du vidéo-boroscope par comparaison de deux images individuelles successives (10, 10') ;
- suivre le défaut éventuel sur l'image vidéo suivant le mouvement détecté par reconnaissance d'image optique sur la base des images individuelles utilisées pour la détection de mouvement (10, 10') ;
- si la trace (92) d'un éventuel défaut sur l'image vidéo correspond au mouvement détecté en direction et vitesse sur une longueur spécifiée, identifier le défaut éventuel comme un défaut réel.

2. Procédé selon la revendication 1,
**caractérisé en ce que**
la détection du mouvement des pales de turbine (90) est utilisée pour identifier la position des pales de turbine individuelles par rapport à une pale de turbine de départ choisie arbitrairement.

3. Procédé selon l'une des revendications précédentes,
**caractérisé en ce que**
le procédé comprend la commande du mouvement de rotation de l'axe de turbine.

4. Procédé selon l'une des revendications précédentes,
**caractérisé en ce que**
pour détecter le mouvement des pales de turbine, les images individuelles sont segmentées en zones de pale individuelles, de préférence à l'aide d'un procédé RCNN à masque, de préférence comprenant un extracteur de caractéristiques basé sur Inception.

5. Procédé selon la revendication 4,
**caractérisé en ce que**
des zones d'exclusion sont définies dans lesquelles aucune segmentation des images individuelles n'est effectuée.

6. Procédé selon l'une des revendications précédentes,
**caractérisé en ce que**
une direction de mouvement des pales de turbine est spécifiée dans la zone d'image du vidéo-boroscope.

7. Procédé selon l'une des revendications précédentes,
**caractérisé en ce que**
les éventuels défauts identifiables comprennent les entailles et les bosses.

8. Produit de programme d'ordinateur comprenant des parties de programme qui, lorsqu'elles sont chargées dans un ordinateur, sont conçues pour mettre en œuvre le procédé selon l'une des revendications 1 à 7.
